# EUROPÄISCHE PATENTSCHRIFT

(11) **EP 0 492 131 B1**
(45) Veröffentlichungstag und Bekanntmachung des Hinweises auf die Patenterteilung: **29.01.1997**
(21) Anmeldenummer: 91119682.2
(22) Anmeldetag: 19.11.1991
(51) Int. Cl.: B29B 17/00, B29K 75/00

(54) **Wiederverwertung duroplastischer Polyurethanschaumteile**
Recycling of duroplastic polyurethane foam articles
Recyclage d'articles à base de mousse polyuréthane duroplastique

(30) Priorität: 27.12.1990 DE 4041864
(43) Veröffentlichungstag der Anmeldung: 01.07.1992
(73) Patentinhaber: Pelzer, Helmut, 58313 Herdecke (DE)
(72) Erfinder: Pelzer, Helmut, 58313 Herdecke (DE)
(74) Vertreter: Jönsson, Hans-Peter, Dr.Dipl.-Chem.

(56) Entgegenhaltungen:
- EP-A- 0 436 871
- PATENT ABSTRACTS OF JAPAN vol. 7, no. 81 (M-205)(1226) 5. April 1983 & JP-A-58 007 335 (AKIRESU K.K.)
- PATENT ABSTRACTS OF JAPAN vol. 6, no. 117 (M-139)(995) 30. Juni 1982 & JP-A-57 045 027 (TOYOTA JIDOSHA KOGYO K.K.)
- PATENT ABSTRACTS OF JAPAN vol. 10, no. 378 (M-546)(2435) 17. Dezember 1986 & JP-A-61 169 221 (KOTOBUKIYA FURONTE K.K.)

## Beschreibung

Die Erfindung betrifft ein Verfahren zur Wiederverwertung duroplastischer Polyurethanschaumteile zur Herstellung neuer Halbzeuge oder Fertigartikel.

Der Anteil in der Automobilindustrie, aber auch in anderen Bereichen verwendeter aus Kunststoffschäumen und insbesondere aus duroplastischen Polyurethanschäumen bestehender Ausstattungsteile wie beispielsweise Formteile für Sitze, Kopfstützen. Armlehnen, usw. ist erheblich. Als bei der Produktion und insbesondere beim Abwracken aus dem Verkehr gezogener Fahrzeuge anfallender Abfall führt er vor allem zu überfüllten Deponien. Das Verbrennen dieser Abfälle verbietet sich schon wegen der zu erwartenden Schadstoffemissionen.

Daher wird seit einiger Zeit die Wiederverarbeitung derartiger Kunststoffschaumabfälle angestrebt. Während bei der Verarbeitung thermoplastischer Kunststoffteile zu neuen Formteilen wesentliche technische Probleme nicht bestehen, scheiterte die Wiederverwertung der duroplastischen Anteile solchen Abfalls an der Eigenschaft der Duroplaste, bei der Polykondensation zwar einen thermoplastischen, unter Anwendung von Wärme zur Formgebung nutzbaren Zustand zu durchlaufen, dabei jedoch unter räumlicher Vernetzung auszuhärten, wonach sie durch Hitze nicht mehr erweichbar sind (s. beispielsweise "Schröter, Lautenschläger, Bibrack, TASCHENBUCH DER CHEMIE", 10. Aufl. 1983 Verlag Harri Deutsch. Thun und Frankfurt/Main. S. 583).

Daher wird eine Form der Wiederverwertung duroplastischer Schäume, insbesondere duroplastischer Polyurethanschäume, praktiziert, bei der die anfallenden Teile zunächst zerkleinert werden. Die danach in Form von Schnitzeln oder auch dünnen Bahnen vorliegenden Zerkleinerungsprodukte werden dann zusammen mit einem der an sich bekannten Bindemittel wie beispielsweise einem Polyurethan-Einkomponentenkleber, einem geeigneten Acrylat oder dergleichen unter Anwendung von Wärme und Druck zu neuen Formteilen, Matten, usw. geformt. Solche Verfahren können zu gut brauchbaren Artikeln führen, sie sind aber besonders infolge der Notwendigkeit, ein Bindemittel mit zu verarbeiten, arbeitsaufwendig sowie mit zusätzlichen Kosten belastet. Außerdem können die Teile durch das Bindemittel u.U. in ihren Eigenschaften verändert werden. Daher wird in vielen Fällen auf die Verwendung von Teilen aus Recyclingmaterial verzichtet.

JP-A-58 00 7335 beschreibt ein Verfahren zur Wiederverwertung zerschnittener Polyurethanschaumteile. Nach diesem Verfahren werden Polyurethanschaumteile in einer beheizbaren Form komprimiert und dabei kurzzeitig auf eine Temperatur erhitzt, die zwischen mindestens 150 °C und 250 °C liegt. Es wird ein Schaumstoffmaterial erhalten, daß eine scheinbare Dichte aufweist, die wenigstens 4,5fach größer ist als die durchschnittliche scheinbare Dichte der Ausgangskomponente.

Der Erfindung liegt die technische Aufgabe zugrunde, einen einfachen und wenig kostenintensiven Weg zur Wiederverwertung insbesondere duroplastischer Polyurethanschäume bereitzustellen. Diese Aufgabe wird gelöst, durch ein Verfahren zur Wiederverwertung von in einem Stück vorliegenden, zu Bahnen oder Schnitzeln zerschnittenen duroplastischen Polyurethanschaumteilen zur Herstellung neuer Halbzeuge oder Fertigartikel, wobei man
a) die Stücke, Bahnen oder Schnitzel in eine heizbare Form füllt,
b) auf eine Temperatur zwischen 160°C und 280°C erhitzt, wobei die Polyurethanschaumteile bis zu einem Raumgewicht komprimiert werden, das mindestens 5 bis 10 % über dem Raumgewicht vor der Zerkleinerung liegt und
c) die komprimierten Teile bis zur Abkühlung auf eine Temperatur unterhalb von 110°C in dem komprimierten Zustand hält.

Das Ausmaß der Komprimierung, die Hohe der den zu verbindenden Teilen vermittelten Temperatur und die Zeitdauer der Wärmeeinwirkung können in weitem Rahmen variiert werden. So können die Temperaturen in den zusammengepreßten Teilen abhängig von der angestrebten Intensität der Verbindung der Teile untereinander und dem Aussehen und der Beschaffenheit der entstehenden Oberflächen in relativ weitem Rahmen zwischen ca. 150 °C und 280 °C, insbesondere zwischen mindestens 180 °C, besser 190 °C und 250 °C gewählt werden, wobei der verwertete Duroplast sowie die angestrebte Beschaffenheit und das Aussehen des entstehenden Formlings für die konkrete Festlegung der Behandlungstemperatur von besonderer Bedeutung sind. Die gewählte Temperatur muß mindestens im Inneren der vorzugsweise benutzten Form, insbesondere aber in der Füllmasse herrschen. Daher wird die Aufheizung durch ein in die Form geleitetes heißes Gas, vorzugsweise Luft oder auch Stickstoff, allein oder in Verbindung mit der Erhitzung der Form- oder Formungswände selbst besonders bevorzugt.

Die Dauer der Hitzeeinwirkung wird über eine Zeitspanne aufrechterhalten, die zwischen 10 s und maximal 20 min, vorzugsweise zwischen 15 s und 10 min, in besonderen Fällen zwischen 20 s und 5 min liegen kann. Dabei können bei der Herstellung eines bestimmten Artikels im Prinzip Temperaturhöhe und Einwirkungszeit in gewisser Weise derart variiert werden, daß sich mit Erhöhung der Temperatur die Einwirkungszeit verkürzt: in der Regel sind jedoch optimale Ergebnisse bei konkreten. ggf. durch Versuch zu ermittelnden Wertekombinationen zu erzielen, die in relativ engen Grenzen liegen.

Erfindungsgemäß ist es möglich, bei dem entstehenden Formteil eine in einem weiten Variationsbereich unterschiedlich ausgeprägte Dichte und Glätte der Oberfläche zu erzeugen. Dies kann dadurch erreicht werden, daß die Wände der Form bzw. die die Teile zusammendrückenden Flächen insgesamt oder in den Bereichen, die eine geschlossene Oberfläche aufweisen sollen, vorzugsweise am Ende der Aufheizzeit kurzzeitig, d.h. für eine Zeitspanne zwischen 3 s und 25 s auf eine Temperatur gebracht werden, die zwischen 280 °C und 320 °C, vorzugsweise bei 300 °C liegt.

Für das Ausmaß, bis zu dem in Verbindung mit der gewählten Temperatur die Komprimierung des Schnitzelgemisches mindestens erfolgen muß, ist von Bedeutung, welche Intensität der ohne Zusatz von Bindemitteln erzielbaren Bindung zwischen den einelnen Schnitzeln angestrebt wird. Um überhaupt eine solche Bindung zu erhalten, hat sich eine Volumenverkleinerung, d.h. eine Komprimierung des Schnitzelgemisches bis zu einem mindestens ca. 5 % bis 10 % über dem Raumgewicht der eingesetzten Polyurethanschaumteile vor ihrer Zerkleinerung liegenden Raumgewicht als erforderlich erwiesen.

Insgesamt hängt die Wahl des über das erforderliche Mindestmaß hinausgehenden Ausmaßes der Volumenverkleinerung während der Ausführung des erfindungsgemäßen Verfahrens wesentlich auch davon ab, bis zu welchem Ausmaß die in dem vorgelegten Ausgangsmaterial vorhandene Porenstruktur erhalten bleiben soll. Auch diese Eigenschaft des Verfahrensproduktes kann in einem weiten Bereich, der von der geringfügigen Verkleinerung der Porenstruktur bis zu deren Verschwinden reichen kann, variiert werden. Dabei hat sich gezeigt, daß auch bei nur geringfügiger Volumenverkleinerung die Erzeugung einer glatten und geschlossenen Oberfläche durch die weiter oben erwähnte Schockerhitzung möglich ist.

In Weiterbildung der Erfindung können die wie vorhergehend beschrieben erzeugten Teile einseitig oder beidseitig mit einem Vlies, einem Gewirke oder Gewebe oder mit einem anderen haltbar aufgebrachten Flächengebilde kaschiert werden. Dies kann zusammen mit dem Formen des Teils durch die zum Formen des zu kaschierenden Teils eingeleitete Wärme vorgenommen werden oder auch nach dem Ausformen erfolgen. Ebenso kann - in der Form oder bei dem ausgeformten Teil - die Verbindung zwischen Formteil und Flächengebilde(n) durch ein an sich bekanntes Bindemittel geschehen.

Daß, wie gefunden wurde, insbesondere ausgehärtete duroplastische Polyurethanschäume entgegen der herrschenden Verkehrsauffassung unter bestimmten Bedingungen erneut unter Wärmeeinwirkung bleibend verformbar sind, war überraschend. Die durch das erfindungsgemäße Verfahren erzeugten Produkte können in vielfältiger Weise mit anderen Flächengebilden verbunden werden, wodurch mit einfachen Mitteln auch bei schwacher Komprimierung während der Herstellung, etwa schon mit einfachen mit einer oder den beiden Oberflächen verbundenen Fadengelegen, formbeständige und haltbare Oberflächen erzielbar sind.

Der Erläuterung der Erfindung dienen die folgenden Beispiele.

### BEISPIEL 1

Schaumabfälle aus duroplastischem Polyurethan mit einem mittleren Raumgewicht von 80 kg/m³ wurden auf eine Korngröße der Schnitzel von φ 6 mm zerkleinert. Die Schnitzel wurden in eine auf 180 °C aufgeheizte Form lose eingebracht, auf ein Raumgewicht von 120 kg/m³ verdichtet und 2 min unter diesen Bedingungen gehalten. Der danach entnommene Formling zeigte eine durchgehend zusammenhängende Oberfläche und hohe Elastizität bei weitgehender Erhaltung der Porenstruktur.

Eine Wiederholung des Beispiels bei einer Temperatur von 190 °C zeigte eine weiter verbesserte Verbindung zwischen den Schnitzeln.

### BEISPIEL 2

Das Zerkleinerungsprodukt gemäß Beispiel 1 wurde zur Herstellung einer Verbindung zwischen den Schnitzeln zwischen Platten zu einem Flächengebilde von 20 mm Dicke und 100 kg/m³ Raumgewicht zusammengedrückt und in diesem Zustand 15 s lang mit durch die Schnitzelansammlung geblasener Heißluft von 200 °C behandelt. Das entstehende plattenförmige Gebilde wurde in eine auf 180 °C vorgeheizte geschlossene Form eingelegt und bis zu einer Dicke von 3 mm und einem Flächengewicht von 3 kg/m² weiter verdichtet. Die entstehende Platte zeigte praktisch keine Porenstruktur mehr, ihre Oberfläche war geschlossen. Das entstandene Gebilde war für Schallschutzmaßnahmen als Schwerschicht geeignet.

### BEISPIEL 3

Das Zerkleinerungsprodukt gemäß Beispiel 1 wurde in eine auf eine Temperatur von 200 °C aufgeheizte Form eingefüllt, deren Boden vorher mit einem netzförmigen PES-Gewirke ausgelegt worden war, und nach Komprimierung auf ca. 65% seines Ausgangsvolumens 3 min in der Form gehalten. Bei dem fertigen Formling war das PES-Gewirke dauerhaft mit dem Formling verbunden.

### BEISPIEL 4

Schaumabfälle aus duroplastischem Polyurethan mit einem mittleren Raumgewicht von 80 kg/m³ wurden auf eine Korngröße der Schnitzel von φ 15 mm zerkleinert. Die Schnitzel wurden in eine auf 180 °C erhitzte Form eingefüllt und 30 s lang unter Zusammendrücken auf eine Dicke von 10 mm und 100 kg/m³ Raumgewicht mit Heißluft von 300 °C behandelt, wobei sie sich miteinander verbanden. Die entstehende Matte wurde zusammen mit dem plattenförmigen Gebilde aus Beispiel 2 in einer auf 200 °C aufgeheizten Form zu einem 3-D-Formteil geformt und 2 min auf Temperatur gehalten. Das entstandene Gebilde war ein zu Lärmschutzzwecken in Fahrzeugen verwendbares Masse-Feder-System.

### BEISPIEL 5

Ein unzerkleinertes Sitzschaumteil aus duroplastischem Polyurethan mit einem mittleren Raumgewicht von 80 kg/m³ und 100 mm Dicke wurde zur Herstellung einer dichten Oberfläche für 20 s in einer auf 350 °C aufgeheizten Form auf eine Dicke von 6 mm zusammengepreßt gehalten. Das ausgeformte Teil zeigte eine glatte, geschlossene Oberfläche und war sehr elastisch.

### BEISPIEL 6

Das Zerkleinerungsprodukt gemäß Beispiel 1 wurde mit 30 % Faserabfällen zusammengemischt ohne Beigabe irgendeines Bindemittels in eine auf 200 °C gebrachte 3-D-Form gefüllt und, auf ca. 60 % des Ausgangsraumgewichts zusammengepreßt, für 2 min in der Form gehalten. Der Formling ließ eine gute, die Festigkeitseigenschaften verbessernde Verbindung zwischen Schnitzeln und Fasern erkennen.

## Patentansprüche

1. Verfahren zur Wiederverwertung von in einem Stück vorliegenden, zu Bahnen oder Schnitzeln zerschnittenen duroplastischen Polyurethanschaumteilen zur Herstellung neuer Halbzeuge oder Fertigartikel, wobei man
a) die Stücke, Bahnen oder Schnitzel in eine heizbare Form füllt,
b) auf eine Temperatur zwischen 160°C und 280°C erhitzt, wobei die Polyurethanschaumteile bis zu einem Raumgewicht komprimiert werden, das mindestens 5 bis 10 % über dem Raumgewicht vor der Zerkleinerung liegt und
c) die komprimierten Teile bis zur Abkühlung auf eine Temperatur unterhalb von 110°C in dem komprimierten Zustand hält.

2. Verfahren nach Anspruch 1, dadurch gekennzeichnet, daß die komprimierten Teile auf eine zwischen 180°C und 250°C liegende Aufheiztemperatur erhitzt werden.

3. Verfahren nach einem der vorhergehenden Ansprüche, dadurch gekennzeichnet, daß die komprimierten Teile auf eine zwischen 190°C und ca. 220°C liegende Aufheiztemperatur erhitzt werden.

4. Verfahren nach einem der vorhergehenden Ansprüche, dadurch gekennzeichnet, daß die komprimierten Teile durch Beheizung der Form bzw. der die Teile zusammendrückenden Flächen oder/und durch Einleitung eines heißen Gases aufgeheizt werden.

5. Verfahren nach einem der vorhergehenden Ansprüche, dadurch gekennzeichnet, daß abhängig von der angestrebten Intensität der Verbindung zwischen den komprimierten Teilen die Hitzeeinwirkung in deren komprimierten Zustand über eine Zeitspanne aufrechterhalten wird, die zwischen 10 s und maximal 20 min liegt.

6. Verfahren nach Anspruch 5, dadurch gekennzeichnet, daß die Hitzeeinwirkung über eine Zeitspanne aufrechterhalten wird, die zwischen 15 s und 10 min und vorzugsweise zwischen 20 s und 5 min liegt.

7. Verfahren nach einem der vorhergehenden Ansprüche, dadurch gekennzeichnet, daß die Wände der Form bzw. die die Teile zusammendrückenden Flächen insgesamt oder in den Bereichen, die eine geschlossene Oberfläche aufweisen sollen, vorzugsweise am Ende der Aufheizzeit kurzzeitig auf eine Temperatur gebracht werden, die zwischen 280°C und 320°C liegt.

8. Verfahren nach Anspruch 7, dadurch gekennzeichnet, daß die Temperatur auf 300°C festgelegt wird.

9. Verfahren nach einem der vorhergehenden Ansprüche, dadurch gekennzeichnet, daß auf das aus Polyurethanschaumschnitzeln oder -bahnen erzeugte Teil einseitig oder beidseitig ein Vlies, ein Gewirke oder Gewebe oder mit einem anderen Flächengebilde aufgebracht und mit dem Teil haltbar verbunden wird.

10. Verfahren nach Anspruch 9, dadurch gekennzeichnet, daß das Aufbringen und Verbinden mit dem Formen des Teils vorgenommen wird.

11. Verfahren nach Anspruch 9, dadurch gekennzeichnet, daß das Aufbringen und Verbinden im Anschluß an das Ausformen vorgenommen wird.

12. Verfahren nach einem der Ansprüche 9 bis 11, dadurch gekennzeichnet, daß die Verbindung zwischen Formteil und Flächengebilde(n) durch die zum Formen des zu kaschierenden Teils eingeleitete Wärme erfolgt.

13. Verfahren nach einem der Ansprüche 9 bis 11, dadurch gekennzeichnet, daß die Verbindung zwischen Formteil und Flächengebilde(n) durch ein ansich bekanntes Bindemittel erfolgt.

## Claims

1. A process for recycling thermosetting polyurethane foam parts present in a piece or cut to webs or chips for the preparation of new semifinished or finished products wherein
a) said pieces, webs or chips are filled in a heatable mold;
b) heating is performed to a temperature between 160°C and 280°C while said polyurethane foam parts are compressed to a bulk density which is at least 5 to 10% higher than the bulk density prior to the comminution; and
c) the compressed parts are maintained in the compressed state until cooled down to a temperature below 110°C.

2. The process according to claim 1, characterized in that the parts being compressed are heated to a temperature of between 180°C and 250°C.

3. The process according to one of the preceding claims, characterized in that the parts being compressed are heated to a temperature of between 190°C and about 220°C.

4. The process according to one of the preceding claims, characterized in that the parts being compressed are heated up by heating the mold or the faces compressing the parts and/or by introducing a hot gas.

5. The process according to one of the preceding claims, characterized in that, depending on the sought intensity of the bonding between the compressed parts, the action of heat in their compressed state is maintained for a period of time between 10 s and a maximum of 20 min.

6. The process according to claim 5, characterized in that the action of heat is maintained for a period of time between 15 s and 10 min and preferably between 20 s and 5 min.

7. The process according to one of the preceding claims, characterized in that the walls of the mold or of the faces compressing the parts, either throughout or at the regions which are to have a closed surface, are brought to a temperature between 280°C and 320°C for a short period of time, preferably at the end of the heating period.

8. The process according to claim 7, characterized in that said temperature is set at 300°C.

9. The process according to one of the preceding claims, characterized in that onto the part produced from polyurethane foam chips or webs, a non-woven, knitted or woven fabric or other sheet material is applied on one or both sides thereof and durably connected with said part.

10. The process according to claim 9, characterized in that said applying and connecting is effected along with the molding of the part.

11. The process according to claim 9, characterized in that said applying and connecting is effected subsequently to the completion of molding.

12. The process according to any of claims 9 to 11, characterized in that said connecting between the molded part and the sheet material(s) is effected by the heat introduced for molding the part to be thus backed.

13. The process according to any of claims 9 to 11, characterized in that the connection between the molded part and the sheet material(s) is achieved by a per se known binder material.

## Revendications

1. Procédé de recyclage d'articles d'un seul tenant à base de mousse de polyuréthane duroplastique, découpés en bandes ou en copeaux pour la fabrication de nouveaux articles semi-finis ou finis, comprenant les étapes consistant à :
a) remplir un moule pouvant être chauffé avec les morceaux, les bandes ou les copeaux.
b) chauffer à une température variant de 160°C à 280°C, les fragments à base de mousse de polyuréthane étant comprimés jusqu'à un poids spécifique allant de 5 % à 10 %, au minimum, au-dessus du poids spécifique avant le découpage, et
c) maintenir les fragments comprimés dans leur état comprimé jusqu'au refroidissement à une température inférieure à 110°C.

2. Procédé selon la revendication 1, caractérisé en ce que les fragments comprimés sont chauffés à une température de chauffe variant de 180°C à 250°C.

3. Procédé selon l'une quelconque des revendications précédentes, caractérisé en ce que les fragments comprimés sont chauffés à une température de chauffe variant de 190°C à environ 220°C.

4. Procédé selon l'une quelconque des revendications précédentes, caractérisé en ce que les fragments comprimés sont chauffés par l'intermédiaire du chauffage du moule ou des surfaces comprimant les fragments ou/et par l'introduction d'un gaz brûlant.

5. Procédé selon l'une quelconque des revendications précédentes, caractérisé par l'étape consistant à maintenir, selon l'intensité désirée pour la liaison entre les fragments comprimés, l'influence de la chaleur, dans leur état comprimé, sur un laps de temps qui varie de 10 s jusqu'à 20 min au maximum.

6. Procédé selon la revendication 5, caractérisé en ce que l'on maintient l'influence de la chaleur sur un laps de temps qui se situe entre 15 s et 10 min, et de préférence entre 20 s et 5 min.

7. Procédé selon l'une quelconque des revendications précédentes, caractérisé en ce que les parois du moule ou bien les surfaces qui compriment les fragments, sont portées, dans leur totalité ou dans les zones qui doivent présenter une surface fermée, à une température qui varie de 280°C à 320°C, sur une courte durée, de préférence à la fin du temps de chauffe.

8. Procédé selon la revendication 7, caractérisé en ce que la température est fixée à 300°C.

9. Procédé selon l'une quelconque des revendica-tions précédentes, caractérisé par l'étape consistant à appliquer, sur une face ou sur les deux faces de l'article fabriqué à partir de bandes ou de copeaux de mousse de polyuréthane, un voile non tissé, un tissu à mailles ou un tissage avec une autre structure de surface, que l'on assemble solidement avec l'article.

10. Procédé selon la revendication 9, caractérisé en ce que l'application et l'assemblage sont effectués en même temps que le moulage de l'article.

11. Procédé selon la revendication 9, caractérisé en ce que l'application et l'assemblage sont effectués à la suite du démoulage.

12. Procédé selon l'une des revendications de 9 à 11, caractérisé en ce que l'assemblage entre la pièce moulée et la ou les structures de surface est fait au moyen de la chaleur introduite pour mouler l'article devant être recouvert.

13. Procédé selon l'une des revendications de 9 à 11, caractérisé en ce que l'assemblage entre l'article moulé et la ou les structures de surface se fait au moyen d'un agent adhésif connu en soi.
